# EUROPEAN PATENT SPECIFICATION

(11) **EP 2 677 142 B1**
(45) Date of publication and mention of the grant of the patent: **25.02.2015**
(21) Application number: 12173156.6
(22) Date of filing: 22.06.2012
(51) Int. Cl.: F02D 13/02, F02D 19/06, F02D 19/10, F01L 13/00, F02D 41/30, F02D 41/40, F01L 1/18, F01L 1/14, F02D 1/16, F01L 1/344

(54) **Method and device for controlling the operation of dual-fuel engine**
Verfahren und Vorrichtung zur Steuerung des Betriebs eines Doppelbrennstoffmotors
Matériau de restauration dentaire

(43) Date of publication of application: 25.12.2013
(73) Proprietor: Caterpillar Motoren GmbH & Co. KG, 24159 Kiel (DE)
(72) Inventor: Dr. Schlemmer-Kelling, Udo, 24113 Molfsee (DE)
(74) Representative: Kramer Barske Schmidtchen Patentanwälte PartG mbB

(56) References cited:
- EP-A1- 2 136 054
- US-A- 5 228 423
- US-A- 5 329 894

## Description

### Technical Field

The present disclosure generally refers to a method and device for controlling the operation of a dual-fuel engine, i.e. an internal combustion engine running with both diesel fuel and gaseous fuel. Such a dual-fuel engine may be equipped with an exhaust gas recirculation system (EGR) and/or which may be charged via an exhaust gas turbocharger. In particular, but not exclusively, large internal combustion engines configured to bum diesel and gas as, for example, used at ships, vessels or power plants, or in heavy road vehicles and construction vehicles may be controlled according to the present disclosure.

### Background

Various technologies for adjusting the opening and closing of inlet valves and outlet valves are, for example, known from EP 0 560 126 A1, GB 969,297, US 5,713,335 A, US 5,666,913 A, JP 2006-153009 A, DE 33 13 313 C2, DE 10 2004 057 438 A1, US 2009/0235886 A1, JP 11-36833 A, DE 32 13 565 A1, US 6,431,134 B1, EP 1 273 795 A1, EP 1 477 638 A1, and DE 10 359 087 B3.

EP 2 136 054 Al shows a device for controlling the operation of a diesel engine equipped with a rotatable shaft provided with three eccentrics. Each eccentric supports an operating lever. A first eccentric supports an inlet valve operating lever formed, for example, as an oscillating arm, which may trace a stroke of an inlet cam via, for example, a roll supported thereon, and may transmit it to the inlet valve via, for example, an inlet valve operating lifter, in order to operate the inlet valve. In a similar manner, a second eccentric supports an outlet valve operating lever, which may trace the stroke of an outlet cam via, for example a roll supported thereon and transmitted to an outlet valve operating lifter. A stroke of a fuel pump cam may be traced by, for example, a roll arranged at the end of a pump operating lever and transmitting it to a pump piston via, for example, a pressure spring. The pump operating lever is supported on the third eccentric. The eccentrics may be formed integrally with the rotatable shaft. The eccentricities of the preferably circular cylindrical circumferential surfaces of the eccentrics relatively to the axis of the rotatable shaft, as well as the relative position of the eccentricities relatively to the relative position of the shaft may be selected individually according to the respective requirements. An actuator and gear wheels form an adjusting device. At stationary operation, the diesel engine is operated at a load greater than 25 % of the full load with two different valve lifting curves, i.e. in the Miller cycle. At loads below 25 % of the full load, the shaft is twisted, so that the diesel engine is operated with two different lifting curves, of which one is identical with that of at load below 25 % of the full load. This technology is also known as flexible camshaft technology (FCT).

A corresponding video illustrating FCT is available under http://www.youtube.com/watch?v=m tL34qgyyA&feature=related

All the technologies known from the prior art documents mentioned above seem to be limited to diesel fuel modes and may need complex and expensive adjusting devices for achieving three different positions of the adjusting device.

The present disclosure is directed, at least in part, to improving or overcoming one or more aspects of prior systems.

### Summary of the Disclosure

Generally, the present disclosure refers to a device for controlling the operation of a dual-fuel engine operable in a low load diesel fuel mode, a high load diesel fuel mode and a gas fuel mode (also referred to as gas mode). A rotatable shaft provided with first to third eccentrics is rotatable by an adjusting device. Three different rotational angles of the shaft in combination with individual designs and arrangements of the first, second and third eccentrics result in respective different appropriate opening and closing timings of inlet and outlet valves, and of an adjusted injection of diesel fuel during a low load diesel fuel mode, a high load diesel fuel mode and a gas fuel mode.

According to the present invention, a control device for controlling the operation of a dual-fuel engine is operable in a low load diesel fuel mode, a high load diesel fuel mode and a gas fuel mode. The control device comprises a shaft rotationally supported. The shaft is provided with a first eccentric, a second eccentric and a third eccentric. The first eccentric is configured to support an inlet valve operating lever for controlling an inlet valve. The second eccentric is configured to support an outlet valve operating lever for controlling an outlet valve, and the third eccentric is configured to support a fuel pump operating lever for controlling a fuel pump. An adjusting device is provided and configured to adjust the rotational angle of the shaft in a low load diesel fuel mode angle position, a high load diesel fuel mode angle position different to the low load diesel fuel mode angle position, and in a gas fuel mode angle position different to the low load diesel fuel mode angle position and different to the high load diesel fuel mode angle position. Due to the different angle positions the first, second and third eccentrics take different rotational positions and the respective associated inlet valve operating lever, outlet valve operating lever and fuel pump operating lever moves. As a result of such a movement associated valve or pump operating lifters re-adjust and, therefore, the inlet and/or outlet valve opening timing and/or the fuel injection timing are being amended. The first eccentric is designed and arranged on the shaft such that, in the low load diesel fuel mode angle position, the inlet valve opens late, and, in the high load diesel fuel mode angle position, the inlet valve opens early, and, in the gas fuel mode angle position, the inlet valve opens late. The second eccentric is designed and arranged on the shaft such that, in the low load diesel fuel mode angle position, the outlet valve opens late, and, in the high load diesel fuel mode angle position, the outlet valve opens late, and, in the gas fuel mode angle position, the inlet valve opens early. The third eccentric is designed and arranged on the shaft such that, in the low load diesel fuel mode angle position, the associated fuel pump is controlled such that an injection is performed early, and, in the high load diesel fuel mode angle position, the associated fuel pump is controlled such that an injection is performed late. According to one exemplary embodiment of the present disclosure, in the gas fuel mode angle position, the associated fuel pump may be controlled such that an injection is performed arbitrarily, if the fuel supply to the fuel pump is stopped, for example via a valve.

Also according to the present invention a method for controlling the operation of a dual-fuel engine to be operated in a low load diesel fuel mode, a high load diesel fuel mode and a gas fuel mode is provided. The internal combustion engine comprises a shaft provided with a first eccentric, a second eccentric and a third eccentric. The first eccentric is configured to support an inlet valve operating lever for controlling an inlet valve. The second eccentric is configured to support an outlet valve operating lever for controlling an outlet valve, and the third eccentric is configured to support a fuel pump operating lever for controlling a fuel pump. The method comprises the step of rotating the shaft in a low load diesel fuel mode angle position. In this mode the first eccentric takes a rotational position such that the associated inlet valve operating lever adjusts and the inlet valve opens late, the second eccentric takes a rotational position such that the associated outlet valve operating lever adjusts and the outlet valve opens late, and the third eccentric takes a rotational position such that the associated fuel pump operating lever adjusts and the fuel pump injects early. Further, the method comprises the step of rotating the shaft in a high load diesel fuel mode angle position different to the low load diesel fuel mode angle position. In the high load diesel fuel mode angle position the first eccentric takes a rotational position such that the associated inlet valve operating lever adjusts and the inlet valve opens early, the second eccentric takes a rotational position such that the associated outlet valve operating lever adjusts and the outlet valve opens late, and the third eccentric takes a rotational position such that the associated fuel pump operating lever adjusts and the fuel pump injects late. In addition, the method comprises the step of rotating the shaft in a gas fuel mode angle position different to the low load diesel fuel mode angle position and different to the high load diesel fuel mode angle position. In the gas fuel mode angle position the first eccentric takes a rotational position such that the associated inlet valve operating lever adjusts and the inlet valve opens late, the second eccentric takes a rotational position such that the associated outlet valve operating lever adjusts and the outlet valve opens early. In an exemplary embodiment of the present disclosure, in the gas fuel mode angle position the third eccentric may take any rotational position, if the fuel supply to the pump is being stopped.

According to an exemplary embodiment of the present invention the method and device for controlling the operation of a dual-fuel engine may be modified by providing a low load diesel fuel mode, a high load diesel fuel mode, a low load gas fuel mode and a high load gas fuel mode. The low load gas fuel mode position of a rotatable shaft with three eccentrics may be identical with the low load diesel fuel mode position. Consequently, such a method and device as well as the adjusting device are provided that a low load diesel fuel mode position is different to a high load diesel fuel mode position and the high load gas fuel mode position is different to the low load and high load diesel fuel mode positions. However, the low load gas fuel mode position might be identical with the low load diesel fuel mode position. Consequently, even in the gas fuel mode two different valve positions may be reached, of the inlet and/or outlet valves, but only three different positions of the shaft may be necessary. For example, in the low load diesel fuel mode the valve overlap of the inlet valve and outlet valve is about 62°, but in the high load diesel fuel mode the valve overlap is about 82°. In the high load gas fuel mode the overlap of the valves may be 75°. In the low load diesel fuel mode the inlet valve curve may start at 545°, but in the high load diesel fuel mode the inlet valve curve may start at 525°. In the high load gas fuel mode the inlet valve curve may start at 532°. Accordingly, in the low load gas fuel mode the inlet valve curve may be shifted to "late" in comparison to the high load gas fuel mode and to "early" in the high load diesel fuel mode.

Dual-fuel engine may mean any type of an internal combustion engine configured to bum both fluid fuels as, for example, diesel, heavy fuel oil (HFO) or marine diesel oil (MDO), and gas.

According to the present disclosure, "late" may mean inter alia the inlet valve opening begins later than the inlet valve opening in the high load diesel fuel mode or gas fuel mode. "Early" may mean inter alia the inlet valve opening begins earlier than in the gas fuel mode.

It has to be noted that the terms "gas fuel mode", "gas mode" and "gaseous fuel mode" may be used herein for the same kind of operation mode of the internal combustion engine. All these terms may refer to that kind of operation mode of an internal combustion engine in which the internal combustion engine bums a gaseous fuel like, for example, gas of any gas quality, particularly "non-pipeline quality gas", such as associated with gas in oil fields. In this respect, it is to be understood that even in the gas mode a micro pilot injection system injects a very small amount of liquid fuel when the dual-fuel engine is operating in the gas mode. The micro pilot injection system injects a small amount of liquid fuel to ignite a gas/air mixture. Such micro pilot injection systems are well-known in the art and common in dual-fuel engines. A conventional injection system is used when the dual-fuel engine runs on liquid fuel such as heavy fuel oil diesel oil. If a stop of liquid fuel is mentioned herein in respect to a gas mode, the stop of supply of liquid fuel to the conventional injection system is meant, not that of the micro pilot injection system.

It is to be understood that any reference to an inlet valve, an outlet valve or a fuel pump does not limit the present disclosure to one single valve or pump. To the contrary, one or more inlet and outlet valves or one ore more fuel injection pumps may be controlled by one ore more eccentrics.

Furthermore, it is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 shows a schematic diagram of a control device according to the present disclosure;
Fig. 2 shows a schematic perspective view of an actuator and a gear for adjusting the rotational position of a shaft of the control device of Fig. 1;
Fig. 3 shows a schematic diagram of an injection system, that may be utilized for implementing the method according to the present disclosure;
Fig. 4 shows exemplary embodiments of inlet valve curves and outlet valve curves according to a low load diesel fuel mode as adjusted via the control device and the actuator of Figs. 1 and 2;
Fig. 5 shows exemplary embodiments of inlet valve curves and outlet valve curves according to a high load diesel fuel mode as adjusted via the control device and the actuator of Figs. 1 and 2; and
Fig. 6 shows exemplary embodiments of inlet valve curves and outlet valve curves according to a gas fuel mode as adjusted via the control device and the actuator of Figs. 1 and 2;

### Detailed Description

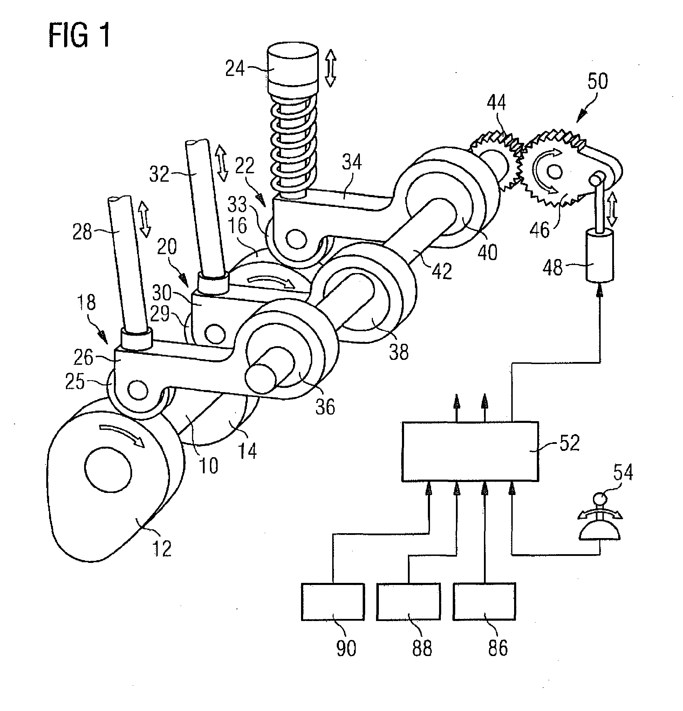

According to Fig. 1, a not illustrated dual-fuel engine, charged via an exhaust gas turbocharger, is provided including, for example, a camshaft 10 which is preferably formed integrally with, for example, several cams, here for example an inlet cam 12, an outlet cam 14 and a pump cam 16.

The inlet cam 12 may operate an inlet valve that is arranged in an inlet of a combustion chamber of a cylinder of the dual-fuel engine, and operated via, for example, an inlet valve operating arrangement 18. The outlet cam 14 may operate an outlet valve arranged in an outlet of a combustion chamber of a cylinder of the dual-fuel engine via, for example, an outlet valve operating arrangement 20. The pump cam 16 may operate a pump piston 24 arranged in an injection pump via, for example, a pump operating arrangement 22.

The inlet valve operating arrangement 18 may comprise an inlet valve operating lever 26 formed, for example, as an oscillating arm, which may trace the stroke of the inlet cam 12 via, for example, a roll 25 supported thereon, and may transmit it to the inlet valve via, for example, an inlet valve operating lifter 28, in order to operate said inlet valve.

In a similar manner, the outlet valve operating arrangement 20 may be provided with an outlet valve operating lever 30, which may trace the stroke of the outlet cam 24 via, for example, a roll 29 supported thereon and transmits it to an outlet valve operating lifter 32.

The stroke of the pump cam 16 may be traced by, for example, a roll 33 arranged at the end of a pump operating lever 34 and transmitted to the pump piston 24.

At their ends facing away from the tracing rolls 25, 29, 33, the operating levers 20, 30 and 34 may be supported on eccentric disks 36, 38 and 40, which are preferably formed integrally with a rotatable shaft 42 that may be supported on an engine housing (not shown). The eccentricities of the preferably circular cylindrical circumferential surfaces of the eccentric disks 36, 38, 40 relatively to the axis of the eccentric shaft 42, as well as the relative position of the eccentricities relatively to the rotational position of the eccentric shaft 42 may be selected individually according to the respective requirements outlined herein.

In order to adjust the rotational position of the eccentric shaft 42, said eccentric shaft 42 may be connected, for example, torsionally stiff, to a gearwheel 44 or any other applicable element meshing with, for example, a teeth of a segmental gearwheel 46, whose rotational position may be adjustable via, for example, an actuator unit 48. The actuator unit 48 together with the segmental gearwheel 46 and the gearwheel 48 may form an adjusting device 50. An hydraulic or pneumatic cylinder may be used as an longitudinal adjustable element. Also a linear motor or any other technical element may be suitable to rotate the eccentric shaft 42 in an appropriate manner.

For controlling the actuator unit 48, an electronic control device 52 may be provided, which preferably comprises a micro processor with appropriate program and data memories and which may be provided with several outlets, at least one of said outlets being connected to the actuator unit 48. The electronic control device 52 is preferably provided with several inlets, one of said inlets being connected with, for example, a load adjusting element 54, by means of which the load of the not illustrated dual-fuel engine is mechanically preselectable or adjustable.

A temperature sensor 86 for detecting the temperature of the dual-fuel engine and a speed sensor 88 for detecting the rotational speed of the crankshaft of the diesel engine may be connected to further inlets of the electronic control unit 52. A load sensor 90 for detecting the required load and its change may also be connected to a further inlet of the electronic control unit 52. The load sensor 90 may be attached directly to the load adjusting member 54.

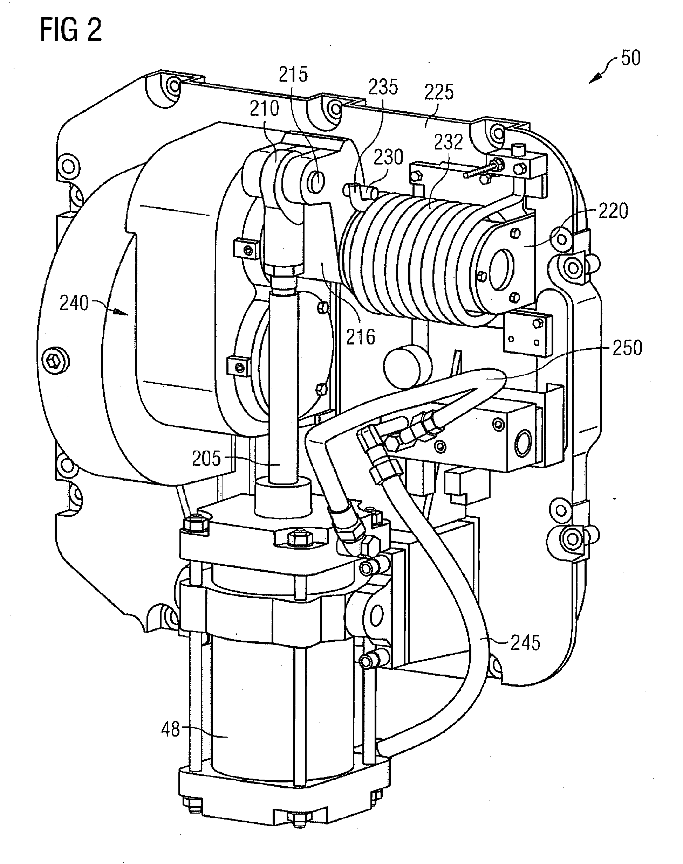

Referring now to Fig. 2 showing an exemplary embodiment of an adjusting unit 50 as, for example, to be used in an arrangement shown in Fig. 1. The adjusting unit 5 of Fig. 2 may comprise a hydraulic or pneumatic actuator 48 having an extendable and retractable actuator rod 205. The actuator rod 205 may have an end 210 mounted at an articulated joint 215. A swing arm 216 may be part of articulated joint 215 and being rotatably mounted in a mounting 220. The swing arm 216 may be biased, for example, via an helical spring 232.

One end of the helical spring 232 may be supported on a mounting plate 225. Another end of the helical spring 232 may be supported on a pivot 230. The pivot 230 may be an integral part of the swing arm 216.

A gear 240 may comprise one or more gear wheels as for example schematically shown in Fig. 1; see reference numerals 44, 46. On the one hand, the gear wheels may be connected to a shaft (not shown) to which swing arm 216 is attached. On the other hand, the gear wheels of the gear 240 may be attached to shaft 42 (see for example Fig. 1). In case that the actuator unit 48 is a pneumatic actuator, a compressed air supply line 245 and a compressed air supply line 250 connect to actuator unit 48.

The adjusting device 50 of Fig. 2 may operate as follows. If compressed air having a first pressure level, for example 10 bar, is being supplied via line 245 the actuator rod 205 is extending as long as the force acting against this movement applied by the helical spring 232 is equal to the force with which the actuator rod 205 is extending. Accordingly, a first extension position is reached. This first extension position may comply with one of the low load diesel fuel mode angle position, high load diesel fuel mode angle position, and gas fuel mode angle position. If the pressure of the compressed air supplied via line 245 is increased, for example to 20 bar, the limitation force applied by the helical spring 232 is overcome and the actuator rod 205 is extending even more far than in the first position mentioned. The actuator rod 205 is then extended up to a mechanical limit provided by, for example, a contact between the swing arm 216 and a stopper attached or arranged at the mounting plate 225. Accordingly, a second position of shaft 42 may be reached. This second position may be another one of the low load diesel fuel mode angle position, the high load diesel fuel mode angle position, and the gas fuel mode angle position.

If compressed air is being supplied via line 250 instead of 245, the actuator rod 205 is being retracted as far as possible, i.e. as allowed by the design of the actuator 48. Accordingly, a third position different from the first and second positions mentioned above, is achievable. This third position may be again another one of the low load diesel fuel mode angle position, the high load diesel fuel mode angle position, and the gas fuel mode angle position. Hence, due to the combination of a simple actuator unit 48 and an intermediate stop force arrangement provided, for example, by the helical spring 232, three different positions are achievable with, for example, a simple and cost effective hydraulic or pneumatic actuation device.

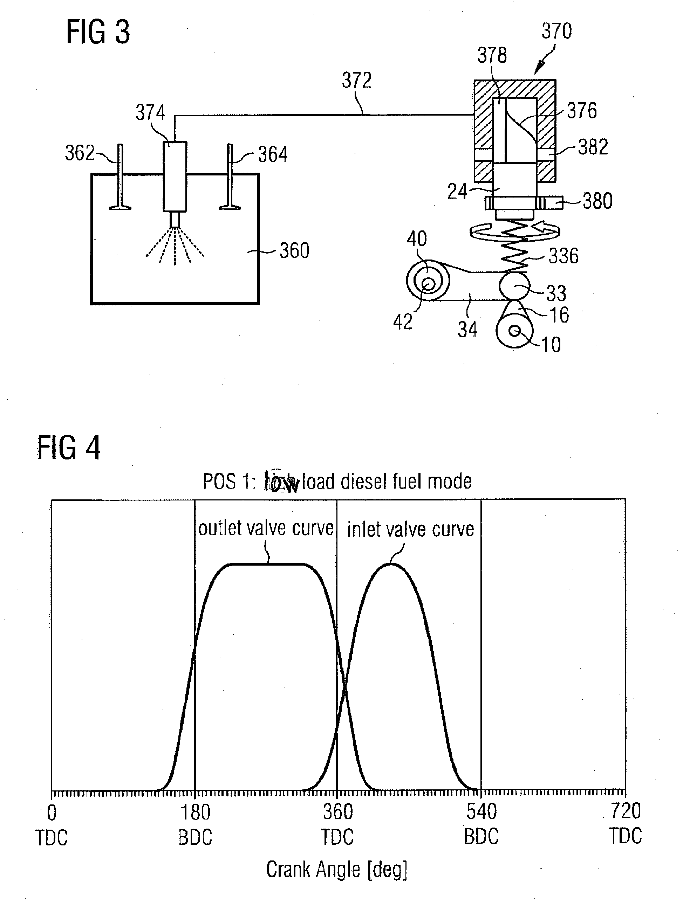

Fig. 3 schematically shows some details of the injection system of a diesel engine including a cylinder 360, an intake valve 360 and an outlet valve 364. According to Fig. 3, an injection pump 370 may be connected to an injection nozzle 374 via a pressure line 372. A pump piston 24 may be provided with a control edge 376 and a longitudinal groove 378. For adjusting the supply rate, the pump piston 24 may be twistable around an axis in parallel to its linear reciprocating movability via, e.g., a control rod 380. Supply bores 382 may be provided to a supply space of the injection pump 370. As immediately clear from Fig. 3, the point of time at which the pump piston 24 may close the supply bores 382 during its upward stroke can be adjusted by, e.g., twisting the eccentric disk 40, as the position of a tracing roll 33 which may be supported on the end of the pump operating lever 34, may be displaced, e.g., along an approximately horizontal line according to Fig. 3.

Assuming that the camshaft 10 rotates clockwise, the pump operating lever 34 with regard to the rotational position of the camshaft 10 may be pivoted upwards the further the pump operating lever 34 may be displaced to the left side according to Fig. 3 by twisting the eccentric shaft 42.

According to the present disclosure, shaft 42 may be positioned in three different angle positions, for example by means of an adjusting device 50 shown in Figs. 1 and 2. A low load diesel fuel mode angle position, a high load diesel fuel mode angle position, and a gas fuel mode angle position.

The table below shows appropriate angle positions with respect to the crankshaft 10 for the opening and/or closing of inlet valves and outlet valves, respectively as well as when the fuel injection may start. By means of the eccentrics of the three eccentric disks 14, 16, 18, the relative rotational arrangement of the disks 14, 16, 18 to each other on the shaft 42, the opening and/or closing of the inlet valves, outlet valves and the start of injection of fuel may be controlled in an appropriate manner.

| Low Load Diesel Fuel Mode | | |
|---|---|---|
| Inlet | IO = 35° (+/- 10°) BTDC | IC = 10° (+/-10°) BBDC |
| Outlet | EO = 40° (+/- 10°) BBDC | EC = 45° (+/-10°) ATDC |
| Injection of fuel | SOI = 13° (+/- 5°) BTDC | |
| | | |

| High Load Diesel Fuel Mode | | |
|---|---|---|
| Inlet | 10 = 45° (+/- 10°) BTDC | IC = 20° (+/- 10°) BBDC |
| Outlet | EO = 40° (+/- 10°) BBDC | EC = 45° (+/-10°) ATDC |
| Injection of fuel | SOI = 6° (+/- 5°) BTDC | |
| | | |

| Gas Fuel Mode | | |
|---|---|---|
| Inlet | IO = 35° (+/- 10°) BTDC | IC = 10° (+/- 10°) BBDC |
| Outlet | EO = 50° (+/- 10°) BBDC | EC = 35° (+/-10°) ATDC |
| Injection of fuel | any / may be like in the high load diesel fuel mode | |

wherein
IO means inlet valve opening
IC means inlet valve closing
EO means exhaust valve opening
EC means exhaust valve closing
SOI means start of injection
BTDC means Before Top Dead Center
BBDC means Before Bottom Dead Center
ATDC means After Top Dead Center

Fig. 4 shows an inlet valve curve and an outlet valve curve corresponding to the low load diesel fuel mode based on the values shown in the table above. Accordingly, in the low load diesel fuel mode the inlet valve may open at 35° BTDC and may close at 10° BBDC. The outlet valve may open at 40° BBDC and may close at 45° ATDC. The fuel injection of diesel fuel may start at 13° BTDC.

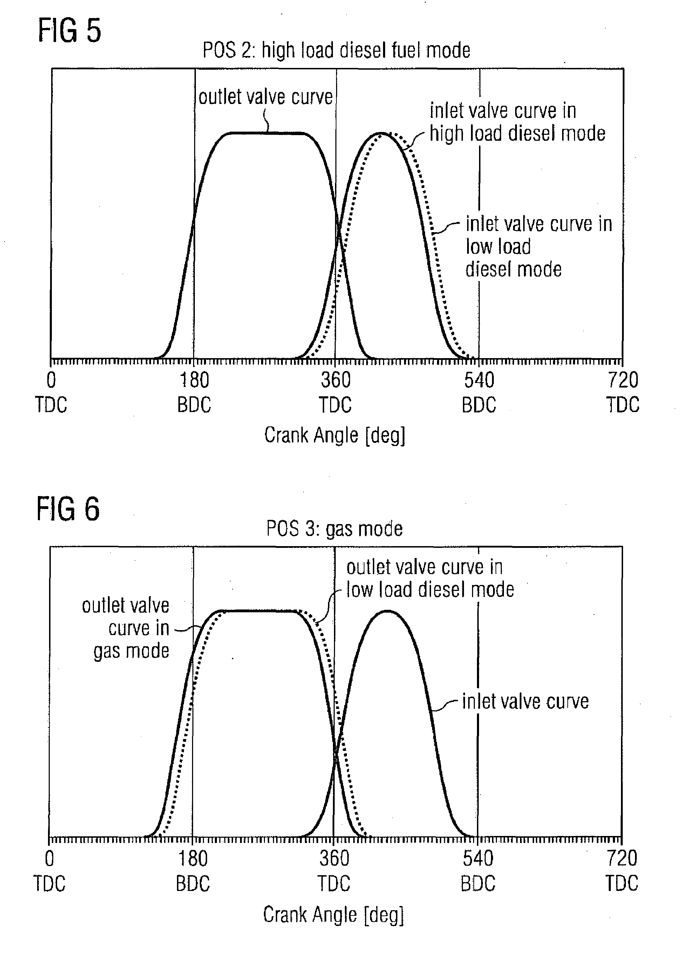

Fig. 5 shows an inlet valve curve and an outlet valve curve corresponding to the high load diesel fuel mode based on the values shown in the table above. Accordingly, in the high load diesel fuel mode the inlet valve may open at 45° BTDC and may close at 20° BBDC. The outlet valve may open at 40° BBDC and may close at 45° ATDC. The fuel injection of diesel fuel may start at 6° BTDC. Accordingly, in an exemplary embodiment of the present disclosure, at the high load diesel fuel mode the outlet valve curve may be unchanged compared to the outlet valve curve of the low load diesel fuel mode, but the inlet valve curve may be shifted to "early" by 10° compared to the inlet valve curve of the low load diesel fuel mode, i.e. to the left in the curve chart shown in Fig. 5.

Fig. 6 shows an inlet valve curve and an outlet valve curve corresponding to the gas fuel mode based on the values shown in the table above. Accordingly, in the gas fuel mode the inlet valve may open at 35° BTDC and may close at 10° BBDC. The outlet valve may open at 50° BBDC and may close at 35° ATDC. The fuel injection of diesel is stopped. If the fuel supply to the fuel pump is stopped by means, for example, a valve, the position of the eccentric disk 40 can be any position as no fuel can be pumped by the pump. In an exemplary embodiment of the present disclosure the SOI may be at 6° BTDC as in the high load diesel fuel mode. Accordingly, in an exemplary embodiment of the present disclosure, at the gas fuel mode the inlet valve curve may be unchanged compared to the inlet valve curve of the low load diesel fuel mode, but the outlet valve curve may be shifted to "early" by 10° compared to outlet valve curve of the low load diesel fuel mode, i.e. to the left in the curve chart shown in Fig. 5.

It has to be noted that the values of IO, IC, EO, EC and SOI according to the above table may be varied within the angle ranges mentioned in the table. All intermediate angle values within the given angle ranges are deemed to be explicitly disclosed.

By the way, as an exemplary embodiment of the present disclosure, the low load range and the high load range may represent together the total load range of the internal combustion engine. The high load range may, for example, comprise a middle and high load range of the engine. In an exemplary embodiment of the present disclosure, the low load range may be defined as 0% to 30% of nominal load and the high load range may be defined as 30% to 110% of nominal load.

### Industrial Applicability

In order to realize the method according to the disclosure, advantageously the following operating parameters are chosen:

At stationary operation, i.e. at constant position of the load adjusting member 54, the diesel engine is operated at a load greater than 25% of the full load, i.e. with a high load diesel fuel mode angle position of shaft 42. Accordingly, for example in the Miller cycle

At loads below 25% of the full load, i.e. a low load diesel fuel mode the eccentric shaft 42 is twisted into the low load diesel fuel mode angle position, so that the diesel engine is operated with the valve lifting curves as shown in the above table and in Fig. 4.

If the operator decides to run the dual fuel engine with gas, shaft 42 has to be rotated into the gas fuel mode position, in which the values IO, IC, EO, EC are controlled via the eccentric disks 36, 38, 40 in accordance with the above table and the curves shown in Fig. 6.

In order that the dual fuel engine burning diesel fuel quickly reacts to an increasing load demand at a load increase of a load range exceeding 30% of the full load, wherein it is operated stationary in the Miller cycle, and supplies the required increased torque, the Miller cycle may be switched off and switched to regular operation, Here, the time gradient, above which gradient the Miller cycle is switched off, may be dependent of the respective load point, and may decrease when the load is increasing. The period of time, during which the Miller cycle is switched off, may be dependent of the respective load and may decrease when the load is increasing. The Miller cycle is, for example, switched of for a period of 4 seconds, when, based on a load point of 30% of the full load during 10 seconds, a load requirement is adjusted to full load within 2 seconds.

According to the present disclosure, the advantages of the Miller-method may be used over a maximum load range and the disadvantages of the Miller-method, which lie in an inferior response to increasing load requirements, may be reduced, preferably to a minimum. For example, according to the disclosure, a diesel engine may be operated in the Miller cycle in a medium and upper load range. The deteriorated response to increased load requirements may be suppressed by switching to regular operation when the load requirements are increasing, wherein immediately a higher charging and therefore a higher charge throughput is achieved by - compared to the Miller cycle - later closing of the inlet valve, which may results in an instant increase of the torque and preferably an improved response of a turbo charger.

A method of switching from the Miller cycle to regular operation at load increase also may be carried out with an adjusting valve timing and injection parameters.

The adjustment of the eccentric shaft 42 may be carried out via different adjusting devices, for example, via a hydraulic cylinder by interconnection of a transmission gear, electromotive, pneumatically, etc.

Herein, a large internal combustion engines may be any kind of dual-fuel engine having an output range of 1,000 kW or more. Dual-fuel engines as disclosed herein may be suitable for Heavy Fuel Oil (HFO), Marine Diesel Oil (MDO) and Diesel Oil (DO) operations.

The whole of the disclosure of EP 2 136 054 Al referring to a first and second load range may be applied to a low load diesel fuel mode and a high load diesel fuel mode, respectively as mentioned herein.

## Claims

1. A device for controlling the operation of an dual-fuel engine operable in a low load diesel fuel mode, a high load diesel fuel mode and a gas fuel mode, the device comprising:
a shaft (42) rotationally supported, the shaft (42) being provided with a first eccentric (36), a second eccentric (38) and a third eccentric (40), the first eccentric (36) being configured to support an inlet valve operating lever (26) for controlling an inlet valve, the second eccentric (38) being configured to support an outlet valve operating lever (30) for controlling an outlet valve, the third eccentric (40) being configured to support a fuel pump operating lever (34) for controlling a fuel pump (70);
an adjusting device (50) configured to re-adjust the rotational angle of the shaft (42) at least in a low load diesel fuel mode angle position, a high load diesel fuel mode angle position different to the low load diesel fuel mode angle position, and a gas fuel mode angle position different to the low load diesel fuel mode angle position and different to the high load diesel fuel mode angle position;
the first eccentric (36) being designed and arranged on the shaft (42) such that, in the low load diesel fuel mode angle position, the associated inlet valve opens late, and, in the high load diesel fuel mode angle position, the associated inlet valve opens early, and, in the gas fuel mode angle position, the associated inlet valve opens late;
the second eccentric (38) being designed and arranged on the shaft (42) such that, in the low load diesel fuel mode angle position, the associated outlet valve opens late, and, in the high load diesel fuel mode angle position, the associated outlet valve opens late, and, in the gas fuel mode angle position, the associated outlet valve opens early; and
the third eccentric (40) being designed and arranged on the shaft (42) such that, in the low load diesel fuel mode angle position, the associated fuel pump is controlled such that an injection is performed early, and, in the high load diesel fuel mode angle position, the associated fuel pump is controlled such that an injection is performed late.

2. The device of claim 1, further the third eccentric (40) being designed and arranged on the shaft (42) such that, in the gas fuel mode angle position, the fuel pump is controlled such no fuel is injected.

3. The device of claim 1 or 2,
the first eccentric (36) being designed and arranged on the shaft (42) such that, in the low load diesel fuel mode angle position, the inlet valve opens within an angle range of 25° BTDC to 45° BTDC, preferably 30° BTDC to 40° BTDC, particularly 33° BTDC to 37° BTDC, and, in the high load diesel fuel mode angle position, the inlet valve opens within an angle range of 35° BTDC to 55° BTDC, preferably 40° BTDC to 50° BTDC, particularly 38° BTDC to 42° BTDC, and, in the gas fuel mode angle position, the inlet valve opens within an angle range of 25° BTDC to 45° BTDC, preferably 35° BTDC to 40° BTDC, particularly 33° BTDC to 37° BTDC;
the second eccentric (38) being designed and arranged on the shaft (42) such that, in the low load diesel fuel mode angle position, the outlet valve opens within an angle range of 30° BBDC to 50° BBDC, preferably 35° BBDC to 45° BBDC, particularly 38° BBDC to 42° BBDC, and, in the high load diesel fuel mode angle position, the outlet valve opens within an angle range of 30° BBDC to 50° BBDC, preferably 35° BBDC to 45° BBDC, particularly 38° BBDC to 42° BBDC, and, in the gas fuel mode angle position, the outlet valve opens within an angle range of 40° BBDC to 60° BBDC, preferably 45° BBDC to 55° BBDC, particularly 48° BBDC to 52° BBDC;
the third eccentric (40) being designed and arranged on the shaft (42) such that, in the low load diesel fuel mode angle position, the fuel pump is controlled such that an injection is performed between an angle range of 8° BTDC to 18° BTDC, preferably 10° BTDC to 16° BTDC, particularly 12° BTDC to 14° BTDC, and, in the high load diesel fuel mode angle position, the fuel pump is controlled such that an injection starts between an angle range of 1° BTDC to 11° BTDC, preferably 3° BTDC to 9° BTDC, particularly 5° BTDC to 7° BTDC;
wherein:
BTDC means Before Top Dead Center; and
BBDC means Before Bottom Dead Center.

4. The device of any one of the preceding claims,
the first eccentric (36) being designed and arranged on the shaft (42) such that, in the low load diesel fuel mode angle position, the inlet valve closes within an angle range of 0° BBDC and 20° BBBDC, preferably 5° BBDC and 15° BBDC, particularly 8° BBDC and 12° BBDC, and, in the high load diesel fuel mode angle position, the inlet valve closes within an angle range of 10° BBDC and 30° BBDC, preferably 15° BBDC and 25° BBDC, particularly 18° BBDC and 22° BBDC, and, in the gas fuel mode angle position, the inlet valve closes within an angle range of 0° BBDC and 20° BBDC, preferably 5° BBDC and 15° BBDC, particularly 8° BBDC and 12° BBDC;
the second eccentric (38) being designed and arranged on the shaft (42) such that, in the low load diesel fuel mode angle position, the outlet valve closes within an angle range of 35° ATDC and 55° ATDC, preferably 40° ATDC and 50° ATDC, particularly 43° ATDC and 47° ATDC, and, in the high load diesel fuel mode angle position, the outlet valve closes within an angle range of 35° ATDC and 55° ATDC, preferably 40° ATDC and 50° ATDC, particularly 43° ATDC and 47° ATDC, and, in the gas fuel mode angle position, the outlet valve closes within an angle range of 25° ATDC and 45° ATDC, preferably 30° ATDC and 40° ATDC, particularly 33° ATDC and 37° ATDC;
the third eccentric (40) being designed and arranged on the shaft (42) such that, in the low load diesel fuel mode angle position, the fuel pump is controlled such that an injection is performed within an angle range of 8° BTDC and 18° BTDC, preferably 10° BTDC and 16° BTDC, particularly 12° BTDC and 14° BTDC, and, in the high load diesel fuel mode angle position, the fuel pump is controlled such that an injection starts within an angle range of 1° BTDC and 11° BTDC, preferably 3° BTDC and 9° BTDC, particularly 5° BTDC and 7° BTDC.
wherein:
BTDC means Before Top Dead Center;
BBDC means Before Bottom Dead Center; and
ATDC means After Top Dead Center.

5. The device of any one of the preceding claims, the device being configured to control a dual-fuel engine equipped with an exhaust gas recirculation system.

6. The device of any one of the preceding claims,
the inlet valve operating lever (26) supporting an inlet valve cam follower (25) configured to contact an inlet cam (12) of a camshaft (10) and configured to support an inlet valve operating lifter (28) for controlling the opening and closing of the inlet valve;
the outlet valve operating lever (30) supporting an outlet valve cam follower (29) configured to contact an outlet cam (14) of the camshaft (10) and configured to support an outlet valve operating lifter (32) for controlling the opening and closing of the outlet valve;
the fuel pump operating lever (34) supporting an fuel pump cam follower (33) configured to contact an fuel pump cam (16) of the camshaft (10) and configured to support an fuel pump operating lifter (24) for controlling the injection timing of the fuel pump.

7. A method for controlling the operation of a dual-fuel internal combustion engine to be operated in a low load diesel fuel mode, a high load diesel fuel mode and a gas fuel mode, the internal combustion engine comprising a shaft (42) provided with a first eccentric (36), a second eccentric (38) and a third eccentric (40), the first eccentric (36) being configured to support an inlet valve operating lever (26) for controlling an inlet valve, the second eccentric (38) being configured to support an outlet valve operating lever (30) for controlling an outlet valve, the third eccentric (40) being configured to support a fuel pump operating lever (34) for controlling a fuel pump (70), the method comprising the steps of:
rotating the shaft (42) in a low load diesel fuel mode angle position, in which the first eccentric (36) takes a position such that the associated inlet valve operating lever (26) adjusts and the inlet valve opens late, the second eccentric (38) takes a position such that the associated outlet valve operating lever (30) adjusts and the outlet valve opens late, and the third eccentric (40) takes a position such that the associated fuel pump operating lever (34) adjusts and the fuel pump injects early;
rotating the shaft (42) in a high load diesel fuel mode angle position different to the low load diesel fuel mode angle position, in the high load diesel fuel mode angle position the first eccentric (36) takes a position such that the associated inlet valve operating lever (26) adjusts and the inlet valve opens early, the second eccentric (38) takes a position such that the associated outlet valve operating lever (30) adjusts and the outlet valve opens late, and the third eccentric (40) takes a position such that the associated fuel pump operating lever (34) adjusts and the fuel pump injects late;
rotating the shaft (42) in a gas fuel mode angle position different to the low load diesel fuel mode angle position and different to the high load diesel fuel mode angle position, in the gas fuel mode angle position the first eccentric (36) takes a position such that the associated inlet valve operating lever (26) adjusts and the inlet valve opens late, the second eccentric (38) takes a position such that the associated outlet valve operating lever (30) adjusts and the outlet valve opens early.

8. The method of claim 7, the method further comprising the steps of:
rotating the shaft (42) in the low load diesel fuel mode angle position, in which the first eccentric (36) takes a rotational position such that the associated inlet valve operating lever (26) adjusts and the inlet valve opens within an angle range of 25° BTDC and 45° BTDC, preferably 30° BTDC and 40° BTDC, particularly 33° BTDC and 37° BTDC, the second eccentric (38) takes a rotational position such that the associated outlet valve operating lever (30) adjusts and the outlet valve opens within an angle range of 30° BBDC and 50° BBDC, preferably 35° BBDC and 45° BBDC, particularly 38° BBDC and 42° BBDC, and the third eccentric (40) takes a rotational position such that the associated fuel pump operating lever (34) adjusts and the fuel pump starts injection within an angle range of 8° BTDC and 18° BTDC, preferably 10° BTDC and 16° BTDC, particularly 12° BTDC and 14° BTDC;
rotating the shaft (42) in a high load diesel fuel mode angle position different to the low load diesel fuel mode angle position, in the high load diesel fuel mode angle position the first eccentric (36) takes a rotational position such that the associated inlet valve operating lever (26) adjusts and the inlet valve opens within an angle range of 35° BTDC and 55° BTDC, preferably 40° BTDC and 50° BTDC, particularly 42° BTDC and 47° BTDC, the second eccentric (38) takes a rotational position such that the associated outlet valve operating lever (30) adjusts and the outlet valve opens within an angle range of 30° BBDC and 50° BBDC, preferably 35° BBDC and 45° BBDC, particularly 38° BBDC and 42° BBDC, and the third eccentric (40) takes a rotational position such that the associated fuel pump operating lever (34) adjusts and fuel pump injects within an angle range of 1° BTDC and 11° BTDC, preferably 3° BTDC and 9° BTDC, particularly 5° BTDC and 7° BTDC;
rotating the shaft (42) in a gas fuel mode angle position different to the low load diesel fuel mode angle position and different to the high load diesel fuel mode angle position, in the gas fuel mode angle position the first eccentric (36) takes a rotational position such that the associated inlet valve operating lever (26) adjusts and the inlet valve opens within an angle range of 25° BTDC and 45° BTDC, preferably 30° BTDC and 40° BTDC, particularly 33° BTDC and 37° BTDC, the second eccentric (38) takes a rotational position such that the associated outlet valve operating lever (30) adjusts and the outlet valve opens within an angle range of 40° BBDC and 60° BBDC, preferably 45° BBDC and 55° BBDC, particularly 48° BBDC and 52° BBDC.
wherein:
BTDC means Before Top Dead Center; and
BBDC means Before Bottom Dead Center.

9. The method of claim 7 or 8, the method further comprising the steps of:
rotating the shaft (42) in a low load diesel fuel mode angle position, in which the first eccentric (36) takes a rotational position such that the associated inlet valve operating lever (26) adjusts and the inlet valve closes within an angle range of 0° BBDC and 20° BBBDC, preferably 5° BBDC and 15° BBDC, particularly 8° BBDC and 12° BBDC, the second eccentric (38) takes a rotational position such that the associated outlet valve operating lever (30) adjusts and the outlet valve opens within an angle range of 35° ATDC and 55° ATDC, preferably 40° ATDC and 50° ATDC, particularly 43° ATDC and 47° ATDC, and the third eccentric (40) takes a rotational position such that the associated fuel pump operating lever (34) adjusts and the fuel pump starts injection within an angle range of 8° BTDC and 18° BTDC, preferably 10° BTDC and 16° BTDC, particularly 12° BTDC and 14° BTDC;
rotating the shaft (42) in a high load diesel fuel mode angle position different to the low load diesel fuel mode angle position, in the high load diesel fuel mode angle position the first eccentric (36) takes a rotational position such that the associated inlet valve operating lever (26) adjusts and the inlet valve closes within an angle range of 10° BBDC and 30° BBDC, preferably 15° BBDC and 25° BBDC, particularly 18° BBDC and 22° BBDC, the second eccentric (38) takes a rotational position such that the associated outlet valve operating lever (30) adjusts and the outlet valve closes within an angle range of 35° ATDC and 55° ATDC, preferably 40° ATDC and 50° ATDC, particularly 43° ATDC and 47° ATDC, and the third eccentric (40) takes a rotational position such that the associated fuel pump operating lever (34) adjusts and fuel pump starts injection within an angle range of 1° BTDC and 11° BTDC, preferably 3° BTDC and 9° BTDC, particularly 5° BTDC and 7° BTDC;
rotating the shaft (42) in a gas fuel mode angle position different to the low load diesel fuel mode angle position and different to the high load diesel fuel mode angle position, in the gas fuel mode angle position the first eccentric (36) takes a rotational position such that the associated inlet valve operating lever (26) adjusts and the inlet valve closes within an angle range of 0° BBDC and 20° BBDC, preferably 5° BBDC and 15° BBDC, particularly 8° BBDC and 12° BBDC, the second eccentric (38) takes a rotational position such that the associated outlet valve operating lever (30) adjusts and the outlet valve closes within an angle range of 25° ATDC and 45° ATDC, preferably 30° ATDC and 40° ATDC, particularly 33° ATDC and 37° ATDC, and the third eccentric (40) takes any rotational position;
wherein:
BTDC means Before Top Dead Center;
BBDC means Before Bottom Dead Center; and
ATDC means After Top Dead Center.

10. The method of any one of the claims 7-9, wherein the low load diesel fuel mode is defined by 0% to 30% of a nominal load of the dual-fuel engine and the high load diesel fuel mode is defined by 30% to 110% of the nominal load.

## Patentansprüche

1. Vorrichtung zum Steuern des Betriebs eines Zweikraftstoffmotors, der in einem Niedriglast-Dieselkraftstoffmodus, einem Hochlast-Dieselkraftstoffmodus und einem Gaskraftstoffmodus betreibbar ist, wobei die Vorrichtung aufweist:
eine rotierbar gelagerte Welle (42), wobei die Welle (42) mit einem ersten Exzenter (3 6), einem zweiten Exzenter (3 8) und einem dritten Exzenter (40) ausgestaltet ist, wobei der erste Exzenter (36) dazu ausgebildet ist, einen Einlassventilbetätigungshebel (26) zum Steuern eines Einlassventils zu tragen, der zweite Exzenter (38) dazu ausgebildet ist, ein Auslassventilbetätigungshebel (30) zum Steuern eines Auslassventils zu tragen, der dritte Exzenter (40) dazu ausgebildet ist, einen Kraftstoffpumpenbetätigungshebel (34) zum Steuern einer Kraftstoffpumpe (70) zu tragen,
eine Einstellvorrichtung (50), die dazu ausgebildet ist, den Drehwinkel der Welle (42) mindestens in eine Winkelposition des Niedriglast-Dieselkraftstoffmodus, eine Winkelposition des Hochlast-Dieselkraftstoffmodus, die sich von der Winkelposition des Niedriglast-Dieselkraftstoffmodus unterscheidet, und eine Winkelposition des Gaskraftstoffmodus, die sich von der Winkelposition des Niedriglast-Dieselkraftstoffmodus unterscheidet und sich von der Winkelposition des Hochlast-Dieselkraftstoffmodus unterscheidet, zu verstellen,
der erste Exzenter (36) so ausgebildet und auf der Welle (42) angeordnet ist, dass sich, in der Winkelposition des Niedriglast-Dieselkraftstoffmodus, das zugeordnete Einlassventil spät öffnet, und sich, in der Winkelposition des Hochlast-Dieselkraftstoffmodus, das zugeordnete Einlassventil früh öffnet, und sich in der Winkelposition des Gaskraftstoffmodus, das zugeordnete Einlassventil spät öffnet,
der zweite Exzenter (38) so ausgebildet und auf der Welle (42) angeordnet ist, dass sich, in der Winkelposition des Niedriglast-Dieselkraftstoffmodus, das zugeordnete Auslassventil spät öffnet, und sich, in der Winkelposition des Hochlast-Dieselkraftstoffmodus, das zugeordnete Auslassventil spät öffnet, und sich, in der Winkelposition des Gaskraftstoffmodus, das zugeordnete Auslassventil früh öffnet, und
der dritte Exzenter (40) so ausgebildet und auf der Welle (42) angeordnet ist, dass, in der Winkelposition des Niedriglast-Dieselkraftstoffmodus, die zugeordnete Kraftstoffpumpe so gesteuert wird, dass eine Einspritzung früh durchgeführt wird, und dass, in der Winkelposition des Hochlast-Dieselkraftstoffmodus, die zugeordnete Kraftstoffpumpe so gesteuert wird, dass eine Einspritzung spät durchgeführt wird.

2. Vorrichtung nach Anspruch 1, wobei der dritte Exzenter (40) ferner so ausgebildet und auf der Welle (42) angeordnet ist, dass, in der Winkelposition des Gaskraftstoffmodus, die Kraftstoffpumpe so gesteuert wird, dass kein Kraftstoff eingespritzt wird.

3. Vorrichtung nach Anspruch 1 oder 2, wobei
der erste Exzenter (36) so ausgebildet und auf der Welle (42) angeordnet ist, dass sich, in der Winkelposition des Niedriglast-Dieselkraftstoffmodus, das Einlassventil in einem Winkelbereich von 25° VOT bis 45° VOT, bevorzugt 30° VOT bis 40° VOT, insbesondere 33° VOT bis 37° VOT, öffnet, und sich, in der Winkelposition des Hochlast-Dieselkraftstoffmodus, das Einlassventil in einem Winkelbereich von 35° VOT bis 55° VOT, bevorzugt 40° VOT bis 50° VOT, insbesondere 38° VOT bis 42° VOT, öffnet, und sich, in der Winkelposition des Gaskraftstoffmodus, das Einlassventil in einem Winkelbereich von 25° VOT bis 45° VOT, bevorzugt 35° VOT bis 40° VOT, insbesondere 33° VOT bis 37° VOT, öffnet,
der zweite Exzenter (38) so ausgebildet und auf der Welle (42) angeordnet ist, dass sich, in der Winkelposition des Niedriglast-Dieselkraftstoffmodus, das Auslassventil in einem Winkelbereich von 30° VUT bis 50° VUT, bevorzugt 35° VUT bis 45° VUT, insbesondere 38° VUT bis 42° VUT, öffnet, und sich, in der Winkelposition des Hochlast-Dieselkraftstoffmodus, das Auslassventil in einem Winkelbereich von 30° VUT bis 50° VUT, bevorzugt 35° VUT bis 45° VUT, insbesondere 38° VUT bis 42° VUT, öffnet, und sich, in der Winkelposition des Gaskraftstoffmodus, das Auslassventil in einem Winkelbereich von 40° VUT bis 60° VUT, bevorzugt 45° VUT bis 55° VUT, insbesondere 48° VUT bis 52° VUT, öffnet,
der dritte Exzenter (40) so ausgebildet und auf der Welle (42) angeordnet ist, dass, in der Winkelposition des Niedriglast-Dieselkraftstoffmodus, die Kraftstoffpumpe so gesteuert wird, dass eine Einspritzung zwischen einem Winkelbereich von 8° VOT bis 18° VOT, bevorzugt 10° VOT bis 16° VOT, insbesondere 12° VOT bis 14° VOT, durchgeführt wird, und, in der Winkelposition des Hochlast-Dieselkraftstoffmodus, die Kraftstoffpumpe so gesteuert wird, dass eine Einspritzung zwischen einem Winkelbereich von 1° VOT bis 11° VOT, bevorzugt 3° VOT bis 9° VOT, insbesondere 5° VOT bis 7° VOT, beginnt,
wobei :
VOT vor oberem Totpunkt bedeutet, und
VUT vor unterem Totpunkt bedeutet.

4. Vorrichtung nach einem der vorherigen Ansprüche, wobei
der erste Exzenter (36) so ausgebildet und auf der Welle (42) angeordnet ist, dass sich, in der Winkelposition des Niedriglast-Dieselkraftstoffmodus, das Einlassventil in einem Winkelbereich von 0° VUT und 20° VUT, bevorzugt 5° VUT und 15° VUT, insbesondere 8° VUT und 12° VUT, schließt, und sich, in der Winkelposition des Hochlast-Dieselkraftstoffmodus, das Einlassventil in einem Winkelbereich von 10° VUT und 30° VUT, bevorzugt 15° VUT und 25° VUT, insbesondere 18° VUT und 22° VUT, schließt, und sich, in der Winkelposition des Gaskraftstoffmodus, das Einlassventil in einem Winkelbereich von 0° VUT und 20° VUT, bevorzugt 5° VUT und 15° VUT, insbesondere 8° VUT und 12° VUT, schließt,
der zweite Exzenter (38) so ausgebildet und auf der Welle (42) angeordnet ist, dass sich, in der Winkelposition des Niedriglast-Dieselkraftstoffmodus, das Auslassventil in einem Winkelbereich von 35° NOT und 55° NOT, bevorzugt 40° NOT und 50° NOT, insbesondere 43° NOT und 47° NOT, schließt, und sich, in der Winkelposition des Hochlast-Dieselkraftstoffmodus, das Auslassventil in einem Winkelbereich von 35° NOT und 55° NOT, bevorzugt 40° NOT und 50° NOT, insbesondere 43° NOT und 47° NOT, schließt. und sich, in der Winkelposition des Gaskraftstoffmodus, das Auslassventil in einem Winkelbereich von 25° NOT und 45° NOT, bevorzugt 30° NOT und 40° NOT, insbesondere 33° NOT und 37° NOT, schließt,
der dritte Exzenter (40) so ausgebildet und auf der Welle (42) angeordnet ist, dass, in der Winkelposition des Niedriglast-Dieselkraftstoffmodus, die Kraftstoffpumpe so gesteuert wird, dass eine Einspritzung in einem Winkelbereich von 8° VOT und 18° VOT, bevorzugt 10° VOT und 16° VOT, insbesondere 12° VOT und 14° VOT, durchgeführt wird, und, in der Winkelposition des Hochlast-Dieselkraftstoffmodus, die Kraftstoffpumpe so gesteuert wird, dass eine Einspritzung in einem Winkelbereich von 1° VOT und 11° VOT, bevorzugt 3° VOT und 9° VOT, insbesondere 5° VOT und 7° VOT. beginnt,
wobei:
VOT vor oberem Totpunkt bedeutet,
VUT vor unterem Totpunkt bedeutet, und
NOT nach oberem Totpunkt bedeutet.

5. Vorrichtung nach einem der vorherigen Ansprüche, wobei die Vorrichtung zum Steuern eines Zweikraftstoffmotors, der mit einem Abgasrückführsystem ausgestattet ist, ausgebildet ist.

6. Vorrichtung nach einem der vorherigen Ansprüche, wobei
der Einlassventilbetätigungshebel (26) einen Einlassventilnockenstößel (25) trägt, der zum Berühren einer Einlassnocke (12) einer Nockenwelle (10) ausgebildet ist und zum Tragen eines Einlassventilbetätigungshebers (28) zum Steuern des Öffnens und Schließens des Einlassventils ausgebildet ist,
der Auslassventilbetätigungshebel (30) einen Auslassventilnockenstößel (29) trägt, der zum Berühren einer Auslasshocke (14) der Nockenwelle (10) ausgebildet ist und zum Tragen eines Auslassventilbetätigungshebers (32) zum Steuern des Öffnens und Schließens des Auslassventils ausgebildet ist,
der Kraftstoffpumpenbetätigungshebel (34) einen Kraftstoffpumpennockenstößel (33) trägt, der zum Berühren einer Kraftstoffpumpennocke (16) der Nockenwelle (10) ausgebildet ist und zum Tragen eines Kraftstoffpumpenbetätigungshebers (24) zum Steuern der Einspritzzeit der Kraftstoffpumpe ausgebildet ist.

7. Verfahren zum Steuern des Betriebs eines Zweikraftstoffverbrennungsmotors, der in einem Niedriglast-Dieselkraftstoffmodus, einem Hochlast-Dieselkraftstoffmodus und einem Gaskraftstoffmodus betreibbar ist, wobei der Verbrennungsmotor eine Welle (42) aufweist, die mit einem ersten Exzenter (36), einem zweiten Exzenter (38) und einem dritten Exzenter (40) ausgestaltet ist, wobei der erste Exzenter (36) dazu ausgebildet ist, einen Einlassventilbetätigungshebel (26) zum Steuern eines Einlassventils zu tragen, der zweite Exzenter (38) dazu ausgebildet ist, einen Auslassventilbetätigungshebel (30) zum Steuern eines Auslassventils zu tragen, der dritte Exzenter (40) dazu ausgebildet ist, einen Kraftstoffpumpenbetätigungshebel (34) zum Steuern einer Kraftstoffpumpe (70) zu tragen, wobei das Verfahren die Schritte aufweist:
Drehen der Welle (42) in eine Winkelposition des Niedriglast-Dieselkraftstoffmodus, in der der erste Exzenter (36) eine Position einnimmt, sodass der zugeordnete Einlassventilbetätigungshebel (26) eingestellt wird und sich das Einlassventil spät öffnet, der zweite Exzenter (38) eine Position einnimmt, sodass der zugeordnete Auslassventilbetätigungshebel (30) eingestellt wird und sich das Auslassventil spät öffnet, und der dritte Exzenter (40) eine Position einnimmt, sodass der zugeordnete Kraftstoffpumpenbetätigungshebel (34) eingestellt wird und die Kraftstoffpumpe früh einspritzt,
Drehen der Welle (42) in eine Winkelposition des Hochlast-Dieselkraftstoffmodus, die sich von der Winkelposition des Niedriglast-Dieselkraftstoffmodus unterscheidet, wobei in der Winkelposition des Hochlast-Dieselkraftstoffmodus, der erste Exzenter (36) eine Position einnimmt, sodass der zugeordnete Einlassventilbetätigungshebel (26) eingestellt wird und sich das Einlassventil früh öffnet, der zweite Exzenter (38) eine Position einnimmt, sodass der zugeordnete Auslassventilbetätigungshebel (30) eingestellt wird und sich das Auslassventil spät öffnet, und der dritte Exzenter (40) eine Position einnimmt, sodass der Kraftstoffpumpenbetätigungshebel (34) eingestellt wird und die Kraftstoffpumpe spät einspritzt,
Drehen der Welle (42) in eine Winkelposition des Gaskraftstoffmodus, die sich von der Winkelposition des Niedriglast-Dieselkraftstoffmodus unterscheidet und sich von der Winkelposition des Hochlast-Dieselkraftstoffmodus unterscheidet, wobei, in der Winkelposition des Gaskraftstoffmodus, der erste Exzenter (36) eine Position einnimmt, sodass der zugeordnete Einlassventilbetätigungshebel (26) eingestellt wird und sich das Einlassventil spät öffnet, der zweite Exzenter (38) eine Position einnimmt, sodass der zugeordnete Auslassventilbetätigungshebel (30) eingestellt wird und sich das Auslassventil früh öffnet.

8. Verfahren nach Anspruch 7, wobei das Verfahren ferner die Schritte aufweist:
Drehen der Welle (42) in die Winkelposition des Niedriglast-Dieselkraftstoffmodus, in der der erste Exzenter (36) eine Drehposition einnimmt, sodass der zugeordnete Einlassventilbetätigungshebel (26) eingestellt wird und sich das Einlassventil in einem Winkelbereich von 25° VOT und 45° VOT, bevorzugt 30° VOT und 40° VOT, insbesondere 33° VOT und 37° VOT, öffnet, der zweite Exzenter (38) eine Drehposition einnimmt, sodass der zugeordnete Auslassventilbetätigungshebel (30) eingestellt wird und sich das Auslassventil in einem Winkelbereich von 30° VUT und 50° VUT, bevorzugt 35° VUT und 45° VUT, insbesondere 38° VUT und 42° VUT, öffnet, und der dritte Exzenter (40) eine Drehposition einnimmt, sodass der zugeordnete Kraftstoffpumpenbetätigungshebel (34) eingestellt wird und die Kraftstoffpumpe eine Einspritzung in einem Winkelbereich von 8° VOT und 18° VOT, bevorzugt 10° VOT und 16° VOT, insbesondere 12° VOT und 14° VOT, beginnt,
Drehen der Welle (42) in eine Winkelposition des Hochlast-Dieselkraftstoffmodus, die sich von der Winkelposition des Niedriglast-Dieselkraftstoffmodus unterscheidet, wobei, in der Winkelposition des Hochlast-Dieselkraftstoffmodus, der erste Exzenter (36) eine Drehposition einnimmt, sodass der zugeordnete Einlassventilbetätigungshebel (26) eingestellt wird und sich das Einlassventil in einem Winkelbereich von 35° VOT und 55° VOT, bevorzugt 40° VOT und 50° VOT, insbesondere 42° VOT und 47° VOT, öffnet, der zweite Exzenter (38) eine Drehposition einnimmt, sodass der zugeordnete Auslassventilbetätigungshebel (30) eingestellt wird und sich das Auslassventil in einem Winkelbereich von 30° VUT und 50° VUT, bevorzugt 35° VUT und 45° VUT, insbesondere 38° VUT und 42° VUT, öffnet, und der dritte Exzenter (40) eine Drehposition einnimmt, sodass der zugeordnete Kraftstoffpumpenbetätigungshebel (34) eingestellt wird und die Kraftstoffpumpe in einem Winkelbereich von 1° VOT und 11° VOT, bevorzugt 3° VOT und 9° VOT, insbesondere 5° VOT und 7° VOT, einspritzt,
Drehen der Welle (42) in eine Winkelposition des Gaskraftstoffmodus, die sich von der Winkelposition des Niedriglast-Dieselkraftstoffmodus unterscheidet und sich von der Winkelposition des Hochlast-Dieselkraftstoffmodus unterscheidet, wobei, in der Winkelposition des Gaskraftstoffmodus, der erste Exzenter (36) eine Drehposition einnimmt, sodass der zugeordnete Einlassventilbetätigungshebel (26) eingestellt wird und sich das Einlassventil in einem Winkelbereich von 25° VOT und 45° VOT, bevorzugt 30° VOT und 40° VOT, insbesondere 33° VOT und 37° VOT, öffnet, der zweite Exzenter (38) eine Drehposition einnimmt, sodass der zugeordnete Auslassventilbetätigungshebel (30) eingestellt wird und sich das Auslassventil in einem Winkelbereich von 40° VUT und 60° VUT, bevorzugt 45° VUT und 55° VUT, insbesondere 48° VUT und 52° VUT, öffnet,
wobei:
VOT vor oberem Totpunkt bedeutet, und
VUT vor unterem Totpunkt bedeutet.

9. Verfahren nach Anspruch 7 oder 8, wobei das Verfahren ferner die Schritte aufweist:
Drehen der Welle (42) in eine Winkelposition des Niedriglast-Dieselkraftstoffmodus, in der der erste Exzenter (36) eine Drehposition einnimmt, sodass der zugeordnete Einlassventilbetätigungshebel (26) eingestellt wird und sich das Einlassventil in einem Winkelbereich von 0° VUT und 20° VUT, bevorzugt 5° VUT und 15° VUT, insbesondere 8° VUT und 12° VUT, öffnet, der zweite Exzenter (38) eine Drehposition einnimmt, sodass der zugeordnete Auslassventilbetätigungshebel (30) eingestellt wird und sich das Auslassventil in einem Winkelbereich von 35° NOT und 55° NOT, bevorzugt 40° NOT und 50° NOT, insbesondere 43° NOT und 47° NOT, öffnet, und der dritte Exzenter (40) eine Drehposition einnimmt, sodass der zugeordnete Kraftstoffpumpenbetätigungshebel (34) eingestellt wird und die Kraftstoffpumpe mit einer Einspritzung in einem Winkelbereich von 8° VOT und 18° VOT, bevorzugt 10° VOT und 16° VOT, insbesondere 12° VOT und 14° VOT, beginnt,
Drehen der Welle (42) in eine Winkelposition des Hochlast-Dieselkraftstoffmodus, die sich von der Winkelposition des Niedriglast-Dieselkraftstoffmodus unterscheidet, wobei, in der Winkelposition des Hochlast-Dieselkraftstoffmodus, der erste Exzenter (36) eine Drehposition einnimmt, sodass der zugeordnete Einlassventilbetätigungshebel (26) eingestellt wird und sich das Einlassventil in einem Winkelbereich von 10° VUT und 30° VUT, bevorzugt 15° VUT und 25° VUT, insbesondere 18° VUT und 22° VUT, öffnet, der zweite Exzenter (38) eine Drehposition einnimmt, sodass der zugeordnete Auslassventilbetätigungshebel (30) eingestellt wird und sich das Auslassventil in einem Winkelbereich von 35° NOT und 55° NOT, bevorzugt 40° NOT und 50° NOT, insbesondere 43° NOT und 47° NOT. öffnet, und der dritte Exzenter (40) eine Drehposition einnimmt, sodass der zugeordnete Kraftstoffpumpenbetätigungshebel (34) eingestellt wird und die Kraftstoffpumpe eine Einspritzung in einem Winkelbereich von 1° VOT und 11° VOT, bevorzugt 3° VOT und 9° VOT, insbesondere 5° VOT und 7° VOT, beginnt,
Drehen der Welle (42) in eine Winkelposition des Gaskraftstoffmodus, die sich von der Winkelposition des Niedriglast-Dieselkraftstoffmodus unterscheidet und sich von der Winkelposition des Hochlast-Dieselkraftstoffmodus unterscheidet, wobei, in der Winkelposition des Gaskraftstoffmodus, der erste Exzenter (36) eine Drehposition einnimmt, sodass der zugeordnete Einlassventilbetätigungshebel (26) eingestellt wird und sich das Einlassventil in einem Winkelbereich von 0° VUT und 20° VUT, bevorzugt 5° VUT und 15° VUT, insbesondere 8° VUT und 12° VUT, schließt, der zweite Exzenter (38) eine Drehposition einnimmt, sodass der zugeordnete Auslassventilbetätigungshebel (30) eingestellt wird und sich das Auslassventil in einem Winkelbereich von 25° NOT und 45° NOT, bevorzugt 30° NOT und 40° NOT, insbesondere 33° NOT und 37° NOT, schließt, und der dritte Exzenter (40) jegliche Drehposition einnimmt,
wobei
VOT vor oberem Totpunkt bedeutet,
VUT vor unterem Totpunkt bedeutet, und
NOT nach oberem Totpunkt bedeutet.

10. Verfahren nach einem der Ansprüche 7-9, wobei der Niedriglast-Dieselkraftstoffmodus durch eine 0%ige bis 30%ige Nennlast des Zweikraftstoffmotors definiert ist und der Hochlast-Dieselkraftstoffmodus durch eine 30%ige bis 110%ige Nennlast definiert ist.

## Revendications

1. Dispositif pour commander le fonctionnement d'un moteur à deux combustibles pouvant fonctionner dans un mode de combustible diesel à faible charge, un mode de combustible diesel à charge élevée et un mode de combustible gazeux, le dispositif comprenant :
un arbre (42) supporté en rotation, l'arbre (42) étant prévu avec un premier excentrique (36), un deuxième excentrique (38) et un troisième excentrique (40), le premier excentrique (36) étant configuré pour supporter un levier de commande de soupape d'entrée (26) afin de commander une soupape d'entrée, le deuxième excentrique (38) étant configuré pour supporter un levier de commande de soupape de sortie (30) afin de commander une soupape de sortie, le troisième excentrique (40) étant configuré pour supporter un levier de commande de pompe à carburant (34) afin de commander une pompe à carburant (70) ;
un dispositif d'ajustement (50) configuré pour réajuster l'angle de rotation de l'arbre (42) au moins dans une position angulaire en mode de combustible diesel à faible charge, une position angulaire en mode de combustible diesel à charge élevée différente de la position angulaire en mode de combustible diesel à faible charge, et une position angulaire en mode de combustible gazeux différente de la position angulaire en mode de combustible diesel à faible charge et différente de la position angulaire en mode de combustible diesel à charge élevée;
le premier excentrique (36) étant conçu et agencé sur l'arbre (42) de sorte que, dans la position angulaire en mode de combustible diesel à faible charge, la soupape d'entrée associée s'ouvre plus tard, et dans la position angulaire en mode de combustible diesel à charge élevée, la soupape d'entrée associée s'ouvre plus tôt, et dans la position angulaire en mode de combustible gazeux, la soupape d'entrée associée s'ouvre plus tard ;
le deuxième excentrique (38) étant conçu et agencé sur l'arbre (42) de sorte que, dans la position angulaire en mode de combustible diesel à faible charge, la soupape de sortie associée s'ouvre plus tard, dans la position angulaire en mode de combustible diesel à charge élevée, la soupape de sortie associée s'ouvre plus tard, et. dans la position angulaire en mode de combustible gazeux, la soupape de sortie associée s'ouvre plus tôt ; et
le troisième excentrique (40) étant conçu et agencé sur l'arbre (42) de sorte que, dans la position angulaire en mode de combustible diesel à faible charge, la pompe à carburant associée est commandée de sorte qu'une injection est réalisée plus tôt, et dans la position angulaire en mode de combustible diesel à charge élevée, la pompe à carburant associée est commandée de sorte qu'une injection est réalisée plus tard.

2. Dispositif selon la revendication 1, **caractérisé en outre en ce que** le troisième excentrique (40) est conçu et agencé sur l'arbre (42) de sorte que, dans la position angulaire en mode de combustible gazeux, la pompe à carburant est commandée de sorte qu'aucun combustible n'est injecté.

3. Dispositif selon la revendication 1 ou 2,
le premier excentrique (36) étant conçu et agencé sur l'arbre (42) de sorte que, dans la position angulaire en mode de combustible diesel à faible charge, la soupape d'entrée s'ouvre dans une plage angulaire de 25° BTDC à 45° BTDC, de préférence de 30° BTDC à 40° BTDC, en particulier de 33° BTDC à 37° BTDC, et dans la position angulaire en mode de combustible diesel à charge élevée, la soupape d'entrée s'ouvre dans une plage angulaire de 35° BTDC à 55° BTDC, de préférence de 40° BTDC à 50° BTDC, en particulier de 38° BTDC à 42° BTDC, et dans la position angulaire en mode de combustible gazeux, la soupape d'entrée s'ouvre dans une plage angulaire de 25° BTDC à 45° BTDC, de préférence de 35° BTDC à 40° BTDC, en particulier de 33° BTDC à 37° BTDC ;
le deuxième excentrique (38) étant conçu et agencé sur l'arbre (42) de sorte que, dans la position angulaire en mode de combustible diesel à faible charge, la soupape de sortie s'ouvre dans une plage angulaire de 30° BBDC à 50° BBDC, de préférence 35° BBDC à 45° BBDC, en particulier de 38° BBDC à 42° BBDC, et dans la position angulaire en mode de combustible diesel à charge élevée, la soupape de sortie s'ouvre dans une plage angulaire de 30° BBDC à 50° BBDC, de préférence de 35° BBDC à 45° BBDC, en particulier de 38° BBDC à 42° BBDC, et dans la position angulaire en mode de combustible gazeux, la soupape de sortie s'ouvre dans une plage de 40° BBDC à 60° BBDC, de préférence de 45° BBDC à 55° BBDC, en particulier de 48° BBDC à 52° BBDC ;
le troisième excentrique (40) étant conçu et agencé sur l'arbre (42) de sorte que, dans la position angulaire en mode de combustible diesel à faible charge, la pompe de carburant est commandée de sorte qu'une injection est réalisée entre une plage angulaire de 8° BTDC à 18° BTDC, de préférence de 10° BTDC à 16° BTDC, en particulier de 12° BTDC à 14° BTDC, et dans la position angulaire en mode de combustible diesel à charge élevée, la pompe à carburant est commandée de sorte qu'une injection commence entre une plage angulaire de 1° BTDC à 11° BTDC, de préférence de 3° BTDC à 9° BTDC, en particulier de 5° BTDC à 7° BTDC ;
dans lequel :
BTDC signifie avant le point mort haut ; et
BBDC signifie avant le point mort bas.

4. Dispositif selon l'une quelconque des revendications précédentes,
le premier excentrique (36) étant conçu et agencé sur l'arbre (42) de sorte que, dans la position angulaire en mode de combustible diesel à faible charge, la soupape d'entrée se ferme dans une plage angulaire comprise entre 0° BBDC et 20° BBDC, de préférence entre 5° BBDC et 15° BBDC, en particulier entre 8° BBDC et 12° BBDC, et dans la position angulaire en mode de combustible diesel à charge élevée, la soupape d'entrée se ferme dans une plage angulaire comprise entre 10° BBDC et 30° BBDC, de préférence entre 15° BBDC et 25° BBDC, en particulier entre 18° BBDC et 22° BBDC, et dans la position angulaire en mode de combustible gazeux, la soupape d'entrée se ferme dans une plage angulaire comprise entre 0° BBDC et 20° BBDC, de préférence entre 5° BBDC et 15° BBDC, en particulier 8° BBDC et 12° BBDC ;
le deuxième excentrique (38) étant conçu et agencé sur l'arbre (42) de sorte que, dans la position angulaire en mode de combustible diesel à faible charge, la soupape de sortie se ferme dans une plage angulaire comprise entre 35° ATDC et 55° ATDC, de préférence entre 40° ATDC et 50° ATDC, en particulier entre 43° ATDC et 47° ATDC, et dans la position angulaire en mode de combustible diesel à charge élevée, la soupape de sortie se ferme dans une plage angulaire comprise entre 35° ATDC et 55° ATDC, de préférence entre 40° ATDC et 50° ATDC, en particulier entre 43° ATDC et 47° ATDC, et dans la position angulaire en mode de combustible gazeux, la soupape de sortie se ferme dans une plage angulaire comprise entre 25° ATDC et 45° ATDC, de préférence entre 30° ATDC et 40° ATDC, en particulier entre 33° ATDC et 37° ATDC ;
le troisième excentrique (40) étant conçu et agencé sur l'arbre (42) de sorte que, dans la position angulaire en mode de combustible diesel à faible charge, la pompe à carburant est commandée de sorte qu'une injection est réalisée dans une plage angulaire comprise entre 8° BTDC et 18° BTDC, de préférence entre 10° BTDC et 16° BTDC, en particulier entre 12° BTDC et 14° BTDC, et dans la position angulaire en mode de combustible diesel à charge élevée, la pompe à carburant est commandée de sorte qu'une injection commence dans une plage angulaire comprise entre 1° BTDC et 11° BTDC, de préférence entre 3° BTDC et 9° BTDC, en particulier entre 5° BTDC et 7° BTDC ;
dans lequel :
BTDC signifie avant le point mort haut ;
BBDC signifie avant le point mort bas ; et
ATDC signifie après le point mort haut.

5. Dispositif selon l'une quelconque des revendications précédentes, le dispositif étant configuré pour commander un moteur à deux combustibles équipé avec un système de recirculation des gaz d'échappement.

6. Dispositif selon l'une quelconque des revendications précédentes,
le levier de commande de soupape d'entrée (26) supportant un poussoir de came de soupape d'entrée (25) configuré pour entrer en contact avec une came d'entrée (12) d'un arbre à cames (10) et configuré pour supporter un poussoir de commande de soupape d'entrée (28) pour commander l'ouverture et la fermeture de la soupape d'entrée ;
le levier de commande de soupape d'entrée (30) supportant un poussoir de came de soupape de sortie (29) configuré pour entrer en contact avec une came de sortie (14) de l'arbre à cames (10) et configuré pour supporter un poussoir de commande de soupape de sortie (32) pour commander l'ouverture et la fermeture de la soupape de sortie;
le levier de commande de pompe à carburant (34) supportant un poussoir de came (33) de pompe à carburant configuré pour entrer en contact avec une came de pompe à carburant (16) de l'arbre à cames (10) et configuré pour supporter un poussoir de commande de pompe à carburant (24) pour commander le calage d'injection de la pompe à carburant.

7. Procédé pour commander le fonctionnement d'un moteur à combustion interne à deux combustibles destiné à fonctionner dans un mode de combustible diesel à faible charge, un mode de combustible diesel à charge élevée et un mode de combustible gazeux, le moteur à combustion interne comprenant un arbre (42) prévu avec un premier excentrique (36), un deuxième excentrique (38) et un troisième excentrique (40), le premier excentrique (36) étant configuré pour supporter un levier de commande de soupape d'entrée (26) afin de commander une soupape d'entrée, le deuxième excentrique (38) étant configuré pour supporter un levier de commande de soupape de sortie (30) afin de commander une soupape de sortie, le troisième excentrique (40) étant configuré pour supporter un levier de commande de pompe à carburant (34) afin de commander une pompe à carburant (70), le procédé comprenant les étapes consistant à :
faire tourner l'arbre (42) dans une position angulaire en mode de combustible diesel à faible charge, dans laquelle le premier excentrique (36) prend une position de sorte que le levier de commande (26) de soupape d'entrée associée procède à l'ajustement et que la soupape d'entrée s'ouvre plus tard, le deuxième excentrique (38) prend une position de sorte que le levier de commande (30) de soupape de sortie associée procède à l'ajustement et que la soupape de sortie s'ouvre plus tard, et le troisième excentrique (40) prend une position de sorte que le levier de commande (34) de pompe à carburant associée procède à l'ajustement et que la pompe à carburant injecte plus tôt ;
faire tourner l'arbre (42) dans une position angulaire en mode de combustible diesel à charge élevée différente de la position angulaire en mode de combustible diesel à faible charge, dans la position angulaire en mode de combustible diesel à charge élevée, le premier excentrique (36) prend une position de sorte que le levier de commande (26) de soupape d'entrée associée procède à l'ajustement et que la soupape d'entrée s'ouvre plus tôt, le deuxième excentrique (38) prend une position de sorte que le levier de commande (30) de soupape de sortie associée procède à l'ajustement et que la soupape de sortie s'ouvre plus tard, et le troisième excentrique (40) prend une position de sorte que le levier de commande (34) de pompe à carburant associée procède à l'ajustement et que la pompe à carburant injecte plus tard ;
faire tourner l'arbre (42) dans une position angulaire en mode de combustible gazeux différente de la position angulaire en mode de combustible diesel à faible charge et différente de la position angulaire en mode de combustible diesel à charge élevée, dans la position angulaire en mode de combustible gazeux, le premier excentrique (36) prend une position de sorte que le levier de commande (26) de soupape d'entrée associée procède à l'ajustement et que la soupape d'entrée s'ouvre plus tard, le deuxième excentrique (38) prend une position de sorte que le levier de commande (30) de soupape de sortie associée procède à l'ajustement et que la soupape de sortie s'ouvre plus tôt.

8. Procédé selon la revendication 7, le procédé comprenant en outre les étapes consistant à :
faire tourner l'arbre (42) dans la position angulaire en mode de combustible diesel à faible charge, dans laquelle le premier excentrique (36) prend une position de rotation de sorte que le levier de commande (26) de soupape d'entrée associée procède à l'ajustement et que la soupape d'entrée s'ouvre dans une plage angulaire comprise entre 25° BTDC et 45° BTDC, de préférence entre 30° BTDC et 40° BTDC, en particulier entre 33° BTDC et 37° BTDC, le deuxième excentrique (38) prend une position de rotation de sorte que le levier de commande (30) de soupape de sortie associée procède à l'ajustement et que la soupape de sortie s'ouvre dans une plage angulaire comprise entre 30° BBDC et 50° BBDC, de préférence entre 35° BBDC et 45° BBDC, en particulier entre 38° BBDC et 42° BBDC, et le troisième excentrique (40) prend une position de rotation de sorte que le levier de commande (34) de pompe à carburant associée procède à l'ajustement et que la pompe à carburant commence l'injection dans une plage angulaire comprise entre 8° BTDC et 18° BTDC, de préférence entre 10° BTDC et 16° BTDC, en particulier entre 12° BTDC et 14° BTDC ;
faire tourner l'arbre (42) dans une position angulaire en mode de combustible diesel à charge élevée différente de la position angulaire en mode de combustible diesel à faible charge, dans la position angulaire en mode de combustible diesel à charge élevée, le premier excentrique (36) prend une position de rotation de sorte que le levier de commande (26) de soupape d'entrée associée procède à l'ajustement et que la soupape d'entrée s'ouvre dans une plage angulaire comprise entre 35° BTDC et 55° BTDC, de préférence entre 40° BTDC et 50° BTDC, en particulier entre 42° BTDC et 47° BTDC, le deuxième excentrique (38) prend une position de rotation de sorte que le levier de commande (30) de soupape de sortie associée procède à l'ajustement et que la soupape de sortie s'ouvre dans une plage angulaire comprise entre 30° BBDC et 50° BBDC, de préférence entre 35° BBDC et 45° BBDC, en particulier entre 38° BBDC et 42° BBDC, et le troisième excentrique (40) prend une position de rotation de sorte que le levier de commande (34) de pompe à carburant associée procède à l'ajustement et que la pompe à carburant procède à l'injection dans une plage angulaire comprise entre 1° BTDC et 11° BTDC, de préférence entre 3° BTDC et 9° BTDC, en particulier entre 5° BTDC et 7° BTDC ;
faire tourner l'arbre (42) dans une position angulaire en mode de combustible gazeux différente de la position angulaire en mode de combustible diesel à faible charge et différente de la position angulaire en mode de combustible diesel à charge élevée, dans la position angulaire en mode de combustible gazeux, le premier excentrique (36) prend une position de rotation de sorte que le levier de commande (26) de soupape d'entrée associée procède à l'ajustement et que la soupape d'entrée s'ouvre dans une plage angulaire comprise entre 25° BTDC et 45° BTDC, de préférence entre 30° BTDC et 40° BTDC, en particulier entre 33° BTDC et 37° BTDC, le deuxième excentrique (38) prend une position de rotation de sorte que le levier de commande (30) de soupape de sortie associée procède à l'ajustement et que la soupape de sortie s'ouvre dans une plage angulaire comprise entre 40° BBDC et 60° BBDC, de préférence entre 45° BBDC et 55° BBDC, en particulier entre 48° BBDC et 52° BBDC ;
dans lequel :
BTDC signifie avant le point mort haut ; et
BBDC signifie avant le point mort bas.

9. Procédé selon la revendication 7 ou 8, le procédé comprenant en outre les étapes consistant à :
faire tourner l'arbre (42) dans une position angulaire en mode de combustible diesel à faible charge, dans laquelle le premier excentrique (36) prend une position de rotation de sorte que le levier de commande (26) de soupape d'entrée associée procède à l'ajustement et que la soupape d'entrée se ferme dans une plage angulaire comprise entre 0° BBDC et 20° BBDC, de préférence entre 5° BBDC et 15° BBDC, en particulier entre 8° BBDC et 12° BBDC, le deuxième excentrique (38) prend une position de rotation de sorte que le levier de commande (30) de soupape de sortie associée procède à l'ajustement et que la soupape de sortie s'ouvre dans une plage angulaire comprise entre 35° ATDC et 55° ATDC, de préférence entre 40° ATDC et 50° ATDC, en particulier entre 43° ATDC et 47° ATDC, et le troisième excentrique (40) prend une position de rotation de sorte que le levier de commande (34) de pompe à carburant associée procède à l'ajustement et que la pompe à carburant commence l'injection dans une plage angulaire comprise entre 8° BTDC et 18° BTDC, de préférence entre 10° BTDC et 16° BTDC, en particulier entre 12° BTDC et 14° BTDC ;
faire tourner l'arbre (42) dans une position angulaire en mode de combustible diesel à charge élevée différente de la position angulaire en mode de combustible diesel à faible charge, dans la position angulaire en mode de combustible diesel à charge élevée, le premier excentrique (36) prend une position de rotation de sorte que le levier de commande (26) de soupape d'entrée associée procède à l'ajustement et que la soupape d'entrée se ferme dans une plage angulaire comprise entre 10° BBDC et 30° BBDC, de préférence entre 15° BBDC et 25° BBDC, en particulier entre 18° BBDC et 22° BBDC, le deuxième excentrique (38) prend une position de rotation de sorte que le levier de commande (30) de soupape de sortie associée procède à l'ajustement et que la soupape de sortie se ferme dans une plage angulaire comprise entre 35° ATDC et 55° ATDC, de préférence entre 40° ATDC et 50° ATDC, en particulier entre 43° ATDC et 47° ATDC, et le troisième excentrique (40) prend une position de rotation de sorte que le levier de commande (34) de pompe à carburant associée procède à l'ajustement et que la pompe à carburant commence l'injection dans une plage angulaire comprise entre 1° BTDC et 11° BTDC, de préférence entre 3° BTDC et 9° BTDC, en particulier entre 5° BTDC et 7° BTDC ;
faire tourner l'arbre (42) dans une position angulaire en mode de combustible gazeux différente de la position angulaire en mode de combustible diesel à faible charge et différente de la position angulaire en mode de combustible diesel à charge élevée, dans la position angulaire en mode de combustible gazeux, le premier excentrique (36) prend une position de rotation de sorte que le levier de commande (26) de soupape d'entrée associée procède à l'ajustement et que la soupape d'entrée se ferme dans une plage angulaire comprise entre 0° BBDC et 20° BBDC, de préférence entre 5° BBDC et 15° BBDC, en particulier entre 8° BBDC et 12° BBDC, le deuxième excentrique (38) prend une position de rotation de sorte que le levier de commande (30) de soupape de sortie associée procède à l'ajustement et que la soupape de sortie se ferme dans une plage angulaire comprise entre 25° ATDC et 45° ATDC, de préférence entre 30° ATDC et 40° ATDC, en particulier entre 33° ATDC et 37° ATDC, et le troisième excentrique (40) prend n'importe quelle position de rotation ;
dans lequel :
BTDC signifie avant le point mort haut ;
BBDC signifie avant le point mort bas ; et
ATDC signifie après le point mort haut.

10. Procédé selon l'une quelconque des revendications 7 à 9, dans lequel le mode de combustible diesel à faible charge est défini par 0% à 30% d'une charge nominale du moteur à deux combustibles et le mode de combustible diesel à charge élevée est défini par 30% à 110% de la charge nominale.
